Europäisches Patentamt

European Patent Office

Office européen des brevets

(19)

(11) **EP 0 806 065 B1**

(12) **FASCICULE DE BREVET EUROPEEN**

(45) Date de publication et mention
de la délivrance du brevet:
**23.09.1998 Bulletin 1998/39**

(51) Int Cl.6: **H01S 3/11**, H01S 3/08,
H01S 3/06

(21) Numéro de dépôt: **96901833.2**

(86) Numéro de dépôt international:
**PCT/FR96/00106**

(22) Date de dépôt: **23.01.1996**

(87) Numéro de publication internationale:
**WO 96/23335 (01.08.1996 Gazette 1996/35)**

(54) **MICROLASER A DECLENCHEMENT ACTIF**

MIKROLASER MIT AKTIVER GÜTESCHALTUNG

ACTIVE Q-SWITCHING MICROCHIP LASER

(84) Etats contractants désignés:
**DE GB IT**

(30) Priorité: **24.01.1995 FR 9500764**

(43) Date de publication de la demande:
**12.11.1997 Bulletin 1997/46**

(73) Titulaire: **COMMISSARIAT A L'ENERGIE
ATOMIQUE
75015 Paris (FR)**

(72) Inventeurs:
• **MOLVA, Engin
F-38000 Grenoble (FR)**
• **THONY, Philippe
F-38000 Grenoble (FR)**

(74) Mandataire: **Moutard, Pascal Jean et al
c/o Brevatome,
25, rue de Ponthieu
75008 Paris (FR)**

(56) Documents cités:
**US-A- 5 048 051        US-E- R E34 812**

• **OPTICS COMMUNICATIONS, vol. 94, no. 4, 15
Novembre 1992, AMSTERDAM NL, pages
281-288, XP002002923 N.MACKINNON ET AL.:
"Pump power induced cavity stability in lithium
neodymium tetraphosphate (LNP) microchip
laser"**
• **OPTICS LETTERS, vol. 10, no. 5, Mai 1985,
WASHINGTON US, pages 232-234, XP002002924
C.S.LEE ET AL.: "Observation of optical
bistability due to resonator configuration
transition"**
• **SOVIET JOURNAL OF QUANTUM
ELECTRONICS, vol. 12, no. 9, Septembre 1982,
WOODBURY, NEW YORK US, pages 1161-1164,
XP002002925 N.N.IL'CHEV ET AL.: "Laser with
diffraction-limited divergence and q switching
by Stimulated Brillouin scattering"**
• **OPTICS LETTERS, vol. 17, no. 17, 1 Septembre
1992, pages 1201-1203, XP000293919
ZAYHOWSKI J J ET AL: "DIODE-PUMPED
MICROCHIP LASERS ELECTRO-OPTICALLY Q
SWITCHED AT HIGH PULSE REPETITION
RATES" cité dans la demande**

**Description**

Domaine technique

L'invention se rapporte au domaine des laser, et en particulier à celui des microlasers solides, déclenchés activement.

L'avantage principal du microlaser réside dans sa structure en un empilement de multicouches, qui est sa caractéristique essentielle. Le milieu actif laser est constitué par un matériau de faible épaisseur entre 150-1000 µm et de petites dimensions (quelques mm$^2$), sur lequel des miroirs diélectriques de cavité sont directement déposés. Ce milieu actif peut être pompé par une diode laser III-V qui est soit directement hybridée sur le microlaser, soit couplée à ce dernier par fibre optique. La possibilité d'une fabrication collective utilisant les moyens de la microélectronique autorise une production de masse de ces microlasers à très faible coût.

Les microlasers ont de nombreuses applications, dans des domaines aussi variés que l'industrie automobile, l'environnement, l'instrumentation scientifique, la télémétrie.

Etat de l'art antérieur

Les microlasers connus ont en général une émission continue de quelques dizaines de mW de puissance. Cependant la plupart des applications citées ci-dessus nécessitent des puissances crêtes (puissance instantanée) de quelques kW délivrées pendant $10^{-8}$ à $10^{-9}$ secondes, avec une puissance moyenne de quelques dizaines de mW.

Dans les lasers solides, on peut obtenir de telles puissances crêtes élevées en les faisant fonctionner en mode pulsé à des fréquences variant entre 10 et $10^4$ Hz. Pour cela, on utilise des procédés de déclenchement de la cavité, par exemple par Q-switch. De tels procédés, s'appliquant aux lasers en général, sont décrits dans l'ouvrage de N. Koechner "Solid State Laser Engineering", Springer Verlag, 1988.

Une cavité peut être déclenchée de manière active ou passive.

Dans le cas du déclenchement passif, des pertes variables sont introduites dans la cavité sous forme d'un matériau absorbant saturable.

Dans le cas d'un déclenchement actif, la valeur des pertes est pilotée de façon externe par l'utilisateur, par exemple par un miroir de cavité tournant, par des moyens acousto-optiques ou électro-optiques intracavité changeant soit le trajet du faisceau, soit son état de polarisation. La durée de stockage, l'instant d'ouverture de la cavité ainsi que le taux de répétition peuvent être choisis indépendamment.

Les documents US-A-5 132 977 et US-A-4 982 405 décrivent des lasers déclenchés activement.

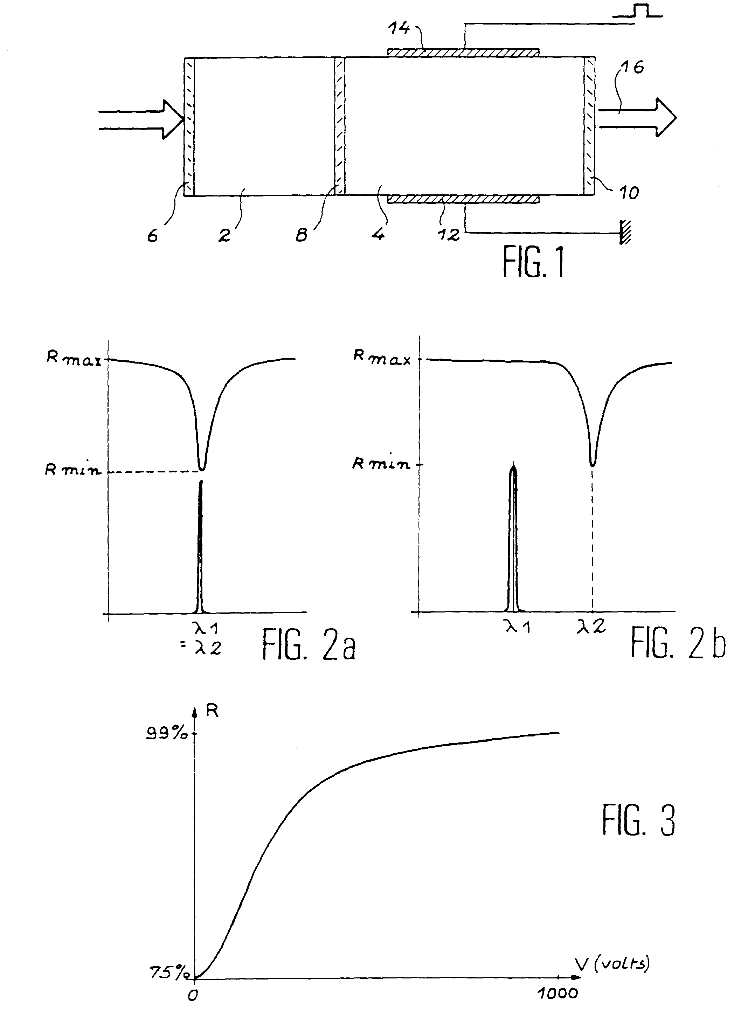

Dans ces documents, le déclenchement est réalisé dans une configuration de deux cavités Fabry-Perot couplées. Un tel ensemble est illustré sur la figure 1, où la référence 2 désigne le milieu actif laser et la référence 4 un matériau déclencheur, par exemple un matériau électro-optique tel que $LiTaO_3$. Le milieu actif 2 du laser forme, avec un miroir d'entrée 6 et un miroir intermédiaire 8 une première cavité Fabry-Perot. Le matériau déclencheur forme, avec le miroir intermédiaire 8 et le miroir de sortie 10 une deuxième cavité Fabry-Perot. Le matériau déclencheur 4 peut être par exemple collé à la surface du miroir intermédiaire 8. Les deux cavités sont couplées. Le déclenchement se fait en modifiant la longueur optique du matériau déclencheur 4 par une action externe. Si l'on appelle $L_1$, $n_1$, $\lambda_1$ (respectivement $L_2$, $n_2$ $\lambda_2$) la longueur, l'indice optique et la longueur d'onde optique de résonance de la première cavité (respectivement de la deuxième cavité), il existe la relation : $m_1\lambda_1=2n_1L_1$ et $m_2\lambda_2=2n_2L_2$ avec $m_1$ et $m_2$ nombres entiers.

Si le matériau 4 est un matériau électro-optique, des électrodes de déclenchement 12, 14 sont placées perpendiculairement à l'axe du faisceau laser 16 de part et d'autre du matériau déclencheur 4. Si une tension V est appliquée entre ces électrodes, un champ électrique E=V/e, où e est la distance entre les électrodes (ce qui correspond à l'épaisseur du matériau électro-optique) en résulte. L'indice optique $n_2$, et par conséquent la longueur optique $n_2L_2$, du matériau électro-optique est modifié par l'action du champ E. Ceci affecte le couplage des deux cavités et modifie la réflectivité du miroir intermédiaire 8 vu par le milieu laser. En effet, si les longueurs d'onde de résonance des deux cavités coïncident ($\lambda_1=\lambda_2$ ou $n_1L_1/n_2L_2=m_1/m_2$) la réflectivité de la deuxième cavité (électro-optique) vue par la première cavité (matériau laser) sera minimum et il n'y aura pas d'action laser. Ainsi, en agissant sur le champ E, on peut modifier les conditions de résonance du laser, dont la réflectivité de la deuxième cavité, et ainsi on peut réaliser le déclenchement actif.

Les deux états correspondant à une réflectivité minimum ou à une réflectivité maximum de la deuxième cavité sont illustrés sur les figures 2a et 2b. Sur ces figures la courbe dans la partie supérieure donne la réflectivité de la deuxième cavité en fonction de la longueur d'onde, la raie laser étant représentée dans la partie inférieure. La figure 2a correspond au cas où la réflectivité de la deuxième cavité est à sa valeur minimum $R_{min}$, à la longueur d'onde de résonance de la première cavité $\lambda_1$. La figure 2b correspond au cas où les longueurs d'onde de résonance des deux cavités ne sont plus identiques ($\lambda_1 \neq \lambda_2$) et où la deuxième cavité présente une réflectivité maximum $R_{max}$ à la longueur d'onde $\lambda_1$.

EP 0 806 065 B1

Dans le cas du laser en général, la structure de double cavité qui vient d'être décrite et son principe de fonctionnement sont complexes, et un problème à résoudre est de disposer d'un nouveau type de laser déclenché activement ayant une structure plus simple.

Par ailleurs, tout ceci s'applique en particulier aux microlasers. Un microlaser ayant cette structure est décrit dans l'article de J.J. Zayhowski et al. intitulé "Diode-pumped microchip lasers electro-optically Q-switched at high pulse repetition rates" paru dans Optics Letters, vol. 17, n° 17, pp. 1201-1203 (1992). Pour un microlaser YAG:Nd émettant vers 1,06 µm, le second matériau 4 étant constitué par du LiTaO$_3$ d'épaisseur environ égale à 1 mm, on a par exemple : $n_1=1, 8$, $n_2=2$, $L_1=500$ µm, $L_2=900$µm. La variation maximum de réflectivité de la deuxième cavité est obtenue pour $d\lambda/\lambda=dL_2/L_2=dn_2/n_2=10^{-4}$ environ. Cette variation d'indice peut être obtenue en appliquant un champ électrique de $10^4$ volts/cm environ dans le matériau déclencheur.

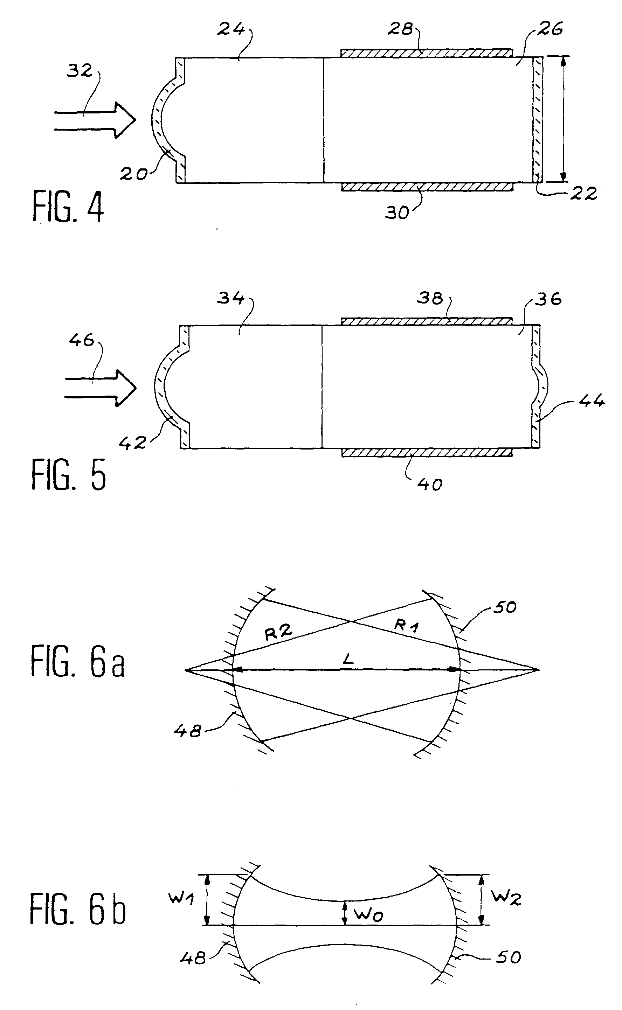

Il est possible d'assimiler la deuxième cavité (électro-optique) à un miroir de sortie de la première cavité constituée du matériau laser. La réflectivité de ce miroir de sortie est variable et commandée par la tension de commande externe appliquée aux électrodes 12, 14. La figure 3 montre, pour un microlaser, la variation de la réflectivité R de la deuxième cavité en fonction de la tension V appliquée. Pour le cas où les trois miroirs 6, 8, 10 ont des réflectivités respectivement égales à 99%, 95% et 50%, la réflectivité de la deuxième cavité va varier entre 75% et 99%. Ainsi, pour le milieu actif ceci revient à faire varier la réflectivité du miroir de sortie entre 75% et 99%, par une commande de tension externe. En fait, on voit d'après le diagramme de la figure 3 qu'il faut appliquer plusieurs centaines de volts pour obtenir une réflectivité voisine de 90% et qu'il faut appliquer environ 1000 volts pour obtenir une réflectivité de l'ordre de 99%, et ceci pour une distance inter-électrodes de 1mm. Comme la tension doit, de plus, être appliquée en un temps très court (<1ns), une électronique sophistiquée est nécessaire, ce qui est incompatible avec la simplicité et le bas coût vers lesquels doivent tendre les microlasers.

Exposé de l'invention

L'invention a tout d'abord pour objet une cavité laser déclenchée activement, mais ayant une structure beaucoup plus simple que les lasers connus déclenchés activement. Ainsi, la cavité laser selon l'invention résout le problème de la complexité des structures connues de lasers fonctionnant en mode actif.

Plus précisément, l'invention a pour objet une cavité laser comportant un matériau actif laser et deux miroirs formant une cavité Fabry-Perot, caractérisée en ce que la cavité est en limite de stabilité optique, et en ce que des moyens sont prévus pour faire varier la longueur optique de la cavité de façon à la faire passer d'un état optiquement instable à un état optiquement stable.

Ainsi, on réalise un nouveau déclenchement actif, puisque l'état optiquement instable est un état à fortes pertes de la cavité, au contraire de l'état optiquement stable.

En outre, la structure obtenue est radicalement différente de la structure comme selon les brevets US-4 982 405 et 5 132 977, puisqu'il n'y a plus qu'une seule cavité Fabry-Perot.

La cavité peut être une cavité hémisphérique, confocale, concentrique ou sphérique.

La cavité comporte, outre un matériau actif, un second matériau de longueur optique variable. Ceci ne nécessite cependant toujours qu'une seule cavité Fabry-Perot, et non pas deux comme dans l'art antérieur.

Les deux matériaux peuvent être juxtaposés, ou collés l'un avec l'autre ou en contact l'un avec l'autre par adhérence moléculaire.

Une couche antireflet peut en outre être déposé à l'interface des deux matériaux.

On obtient ainsi une structure très compacte, monolithique.

Les moyens pour faire varier la longueur optique de la cavité peuvent comporter des moyens pour faire varier la longueur du second matériau.

Selon un autre mode de réalisation, les indices optiques des deux matériaux sont différents et les moyens pour faire varier la longueur optique de la cavité peuvent alors être des moyens pour faire varier l'indice optique du second matériau.

Le second matériau peut être un matériau électro-optique, ou un matériau dont l'indice varie en fonction de la température ou de la pression ou un matériau magnéto-optique ou encore un matériau optiquement non linéaire.

Pour faire varier la longueur optique de la cavité laser, on peut également faire varier simplement sa longueur, en montant un des miroirs, sur un dispositif piézoélectrique permettant de faire osciller ce miroir entre une position dans laquelle la cavité optique est instable et une position dans laquelle la cavité optique est stable.

Une cavité laser telle que décrite ci-dessus peut également être une cavité microlaser.

Ainsi, une seule cavité microlaser est fabriquée, dont on modifie la longueur optique pour déplacer la cavité du domaine instable à forte perte, au domaine stable à faible perte ce qui permet de la déclencher. Il n'est besoin que d'une seule cavité Fabry-Perot, même si elle contient deux matériaux dont l'un est le matériau actif laser et l'autre est un matériau de longueur optiquement variable.

Lorsque les deux matériaux sont juxtaposés ou collés ou qu'ils adhèrent l'un à l'autre par adhérence moléculaire, la compacité du système est améliorée, ce qui est très important dans le cas d'un microlaser. Si la cavité est une cavité hémisphérique confocale ou concentrique ou sphérique, la taille du faisceau dans la cavité est plus faible, et il est alors possible de diminuer les épaisseurs de matériaux employés. La taille du microlaser s'en trouve encore diminuée. Ceci a pour conséquence de permettre de résoudre l'un des problèmes mentionnés ci-dessus, à savoir celui de la valeur importante de la tension à appliquer si le second matériau est un matériau électrooptique : en effet, l'épaisseur de ce dernier diminuant, le même champ électrique est obtenu pour une tension plus faible ($\vec{E} = \Delta V/e$, où e est l'épaisseur entre les électrodes).

Enfin un laser ou microlaser peut comporter une cavité telle que décrite ci-dessus, et des moyens optiques de pompage de la cavité.

Brève description des figures

De toute façon, les caractéristiques et avantages de l'invention apparaîtront mieux à la lumière de la description qui va suivre. Cette description porte sur les exemples de réalisation, donnés à titre explicatif et non limitatif, en se référant à des dessins annexés sur lesquels :

- la figure 1 représente un laser déclenché par un matériau électro-optique, selon l'art antérieur,
- les figures 2a et 2b représentent, pour un dispositif selon l'art antérieur, les positions relatives de la raie laser et d'un mode de la cavité constituée par le matériau déclencheur,
- la figure 3 représente la réflectivité de la deuxième cavité vue par le milieu actif laser de la première cavité dans un microlaser déclenché selon l'art antérieur,
- la figure 4 représente la cavité d'un microlaser déclenché selon la présente invention,
- la figure 5 représente un autre mode de réalisation d'une cavité d'un microlaser déclenché selon la présente invention,
- les figures 6a et 6b représentent une cavité optique limitée par deux miroirs,
- la figure 7 représente une cavité microlaser déclenchée selon la présente invention, et la propagation des faisceaux lumineux à l'intérieur de la cavité,
- les figures 8 à 10 représentent d'autres modes de réalisation d'un laser selon l'invention,
- les figures 11a à 11e représentent des étapes de formation de microlentilles sur un milieu actif laser solide, pour un microlaser selon la présente invention,
- les figures 12a à 12c représentent d'autres étapes de réalisation de microlasers selon la présente invention,
- la figure 13 représente un autre mode de réalisation d'une cavité microlaser selon la présente invention.

Description détaillée de modes de réalisation de l'invention

L'invention va d'abord être décrite selon un mode particulier de réalisation, en liaison avec la figure 4. Sur cette figure, la cavité laser (ou microlaser) est constituée d'un miroir d'entrée 20, d'un miroir de sortie 22, entre lesquels sont compris un milieu actif laser 24 (par exemple YAG:Nd) et un milieu électro-optique 26 (par exemple LiTaO$_3$) . Ce dernier est lui-même compris entre deux électrodes 28, 30. Ces deux électrodes sont par ailleurs reliées à des moyens, non représentés sur la figure, pour établir entre elles une différence de tension $\Delta V$, entraînant la création d'un champ électrique E=$\Delta V/e$ à l'intérieur du milieu 26, où e représente l'épaisseur de ce milieu. Les milieux 24 et 26 sont en contact l'un avec l'autre, une couche antireflet pouvant être déposée à l'interface 24-26. Le milieu actif laser 24 est pompé par un faisceau de pompage 32, par exemple un faisceau d'une diode laser à 808 nm. Les miroirs d'entrée et de sortie peuvent être choisis de façon à avoir, pour le miroir d'entrée, une réflectivité maximale à la longueur d'onde du faisceau laser (1,06$\mu$m si le milieu 24 est du type YAG:Nd) et un coefficient de transmission le plus élevé possible à la longueur d'onde du faisceau de pompage (par exemple R=99,5% à 1,06$\mu$m et T>80% à 808nm). Par ailleurs, le miroir de sortie peut être choisi de façon à avoir un coefficient de réflexion élevé à la longueur d'onde du faisceau laser (par exemple R=85 à 99% à 1,06$\mu$m si le milieu 24 est du type YAG:Nd) et un coefficient de réflexion élevé à la longueur d'onde du faisceau de pompage (par exemple R>80% à 808nm).

La cavité représentée sur la figure 4 est une cavité hémisphérique, en limite de stabilité. Il s'agit d'une seule et unique cavité réalisée avec deux matériaux différents : un matériau laser et un autre matériau dont on peut faire varier l'indice optique par une tension de commande externe. Contrairement au cas des deux cavités couplées, décrites dans l'art antérieur, les deux matériaux forment une seule et unique cavité Fabry-Perot. En effet, à l'interface des deux matériaux on réalise tout au plus une couche antireflet à la longueur d'onde du laser et il n'y a aucun miroir intermédiaire. Les deux matériaux 24 et 26 peuvent être en contact par collage ou par adhérence moléculaire. A la jonction de ces deux matériaux, il peut exister une faible réflectivité de quelques % due aux différences d'indices optiques des deux matériaux, mais cette réflectivité faible ne permet pas d'obtenir une résonance suffisante pour coupler les deux cavités en résonance, comme dans les systèmes décrits dans l'art antérieur.

La figure 5 est un autre exemple de réalisation d'une cavité laser ou microlaser conforme à l'invention. Les milieux 34 et 36 ont des fonctions identiques aux milieux 24 et 26 de la figure 4 : le milieu 34 est un matériau laser d'indice $n_1$ et de longueur $L_1$, et le matériau 36 est un matériau électro-optique d'indice $n_2$ et de longueur $L_2$. Ce matériau 36 est compris entre deux électrodes de contact 38 et 40. La cavité est confocale, fermée par un miroir d'entrée 42 (de rayon de courbure $R_1$ et de diamètre $\phi_1$) et par un miroir de sortie 44 (de rayon de courbure $R_2$ et diamètre $\phi_2$). Le matériau laser pompé par un faisceau de pompage 46. Là encore, les deux matériaux 36 et 34 sont en contact l'un avec l'autre de la même façon que les matériaux 26 et 24 sur la figure 4.

Il reste à déterminer les caractéristiques des miroirs de façon à réaliser une cavité, par exemple confocale (avec deux miroirs concaves comme sur la figure 5) ou hémisphérique (plan concave, comme sur la figure 4), à la limite de la stabilité.

D'une façon générale, si on considère, comme sur la figure 6a, deux miroirs 48, 50 présentant chacun un rayon de courbure $R_1$, $R_2$ séparés par une distance L, la cavité étant vide (ou contenant un seul milieu optique d'indice n), on définit les deux paramètres caractéristiques de la cavité par :

$$g_1 = 1 - L/R_1 \text{ et } g_2 = 1 - L/R_2.$$

Le domaine de stabilité de la cavité est donné par la relation $0 < g_1 g_2 < 1$ ($g_1$ et $g_2$ sont de même signe).

Par ailleurs, si on définit, en liaison avec 1a figure 6b, les tailles des faisceaux d'entrée, de sortie et du faisceau laser intracavité par, respectivement, $w_1$, $w_2$ et $w_0$, on a les relations suivantes dans lesquelles $\lambda$ définit la longueur d'onde :

$$w_1{}^2 = (\lambda.L) / (\pi.g_1) . (g_1 g_2)^{1/2} (1 - g_1 g_2)^{-1/2}$$

$$w_2{}^2 = (\lambda.L) / (\pi.g_2) . (g_1 g_2)^{1/2} (1 - g_1 g_2)^{-1/2}$$

$$w_0{}^2 = (\lambda.L) / (\pi) . (g_1 g_2)^{1/2} (1 - g_1 g_2)^{1/2} . (g_1 + g_2 - 2 g_1 g_2)^{-1/2}$$

Les longueurs d'onde de résonance de la cavité sont données par l'équation :

$$2nL = \lambda . (q + (S+1)/\pi.\arccos(g_1 g_2)^{1/2})$$

où q et S sont des entiers.

Les cas limites de stabilité sont donnés par : $g_1 g_2 = 1$ ou $g_1 g_2 = 0$.

La sensibilité de la cavité à des variations de $g_1$ et de $g_2$ est donnée par :

$$dw_1/w_1 = (dg_1/4g_1). (2 g_1 g_2 - 1)/(1 - g_1 g_2)$$

$$dw_2/w_2 = (dg_2/4g_2). (2 g_1 g_2 - 1) / (1 - g_1 g_2)$$

La sensibilité minimum est obtenue pour $g_1 g_2 = 1/2$, auquel cas dw tend vers 0 (c'est le cas par exemple de la cavité plan concave : $R_2 = \infty$, $g_2 = 1$ ; $R_1 = 2L$, $g_1 = 1/2$) .

La sensibilité maximum est obtenue pour $g_1 g_2 = 1$ (configuration plan parallèle, concentrique, sphérique) où $g_1 = 0$ et/ou $g_2 = 0$ (configuration hémisphérique ou confocale) c'est-à-dire aux limites du domaine de stabilité. Dans ce cas, dw tend vers l'infini.

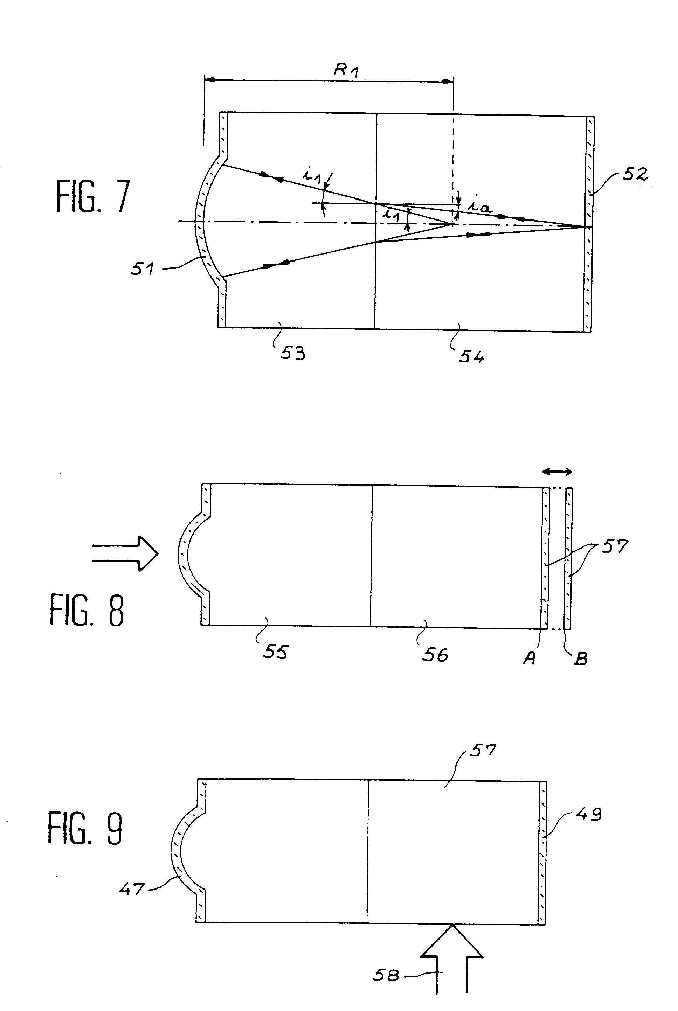

Dans le cas de la cavité selon l'invention, la cavité peut être constituée de deux parties avec deux indices optiques différents $n_1$ et $n_2$. Le cas d'une cavité plan concave (cavité hémisphérique) à la limite de la stabilité est illustré sur la figure 7. Deux miroirs 51, 52 ferment la cavité. Le miroir 51 a un rayon de courbure $R_1$. Le milieu 53 d'indice $n_1$ et de longueur $L_1$ est le milieu actif laser. Le milieu 54 a un indice $n_2 \neq n_1$ et une longueur $L_2$, et il est juxtaposé au milieu 53, par exemple par collage ou adhérence moléculaire.

D'après un calcul très simple reprenant les notations données sur cette figure, on peut montrer que :

- $n_1 \sin i_1 = n_2 \sin i_2$ ($n_1 i_1 = n_2 i_2$ pour des angles faibles)
- $L_2 \tan i_2 = (R_1 - L_1) \tan i_1$ ($L_2 i_2 = (R_1 - L_1) i_1$ pour des angles faibles).

On obtient donc, pour des angles faibles : $n_1 L_2 = n_2 (R_1 - L_1)$.

La stabilité d'une telle cavité plan concave s'exprime donc par :

$n_2 R_1 \geq n_2 L_1 + n_1 L_2$ ou encore $R_1 \geq L_1 + (n_1/n_2) L_2$ ou encore $R_1 \geq L + (n_1/n_2 - 1) L_2$.

Ainsi, on peut définir le paramètre :

$$g_1 = 1 - (n_1 L_2 + n_2 L_1)/(n_2 R_1) = 1 - L/R_1 - (n_1/n_2 - 1) L_2/R_1.$$

De façon symétrique, dans le cas de deux miroirs ayant chacun un rayon de courbure $R_1$, $R_2$, on définit également le paramètre :

$$g_2 = 1 - (n_1 L_2 + n_2 L_1)/(n_1 R_2) = 1 - L/R_2 - (n_2/n_1 - 1) L_1/R_2.$$

Ainsi, on peut considérer toutes les cavités plan sphérique (c'est-à-dire hémisphérique) et sphérique-sphérique (c'est-à-dire confocale, concentrique ou sphérique) qui seront conçues à la limite de la stabilité, là où la sensibilité de la cavité est maximum. On obtient alors les cas suivants :

- cas de la cavité hémisphérique ($g_1 = 0$, $g_2 = 1$) :

$$R_2 = \infty, \quad R_1 = L_1 + (n_1/n_2) L_2,$$

- cas de la cavité confocale ($g_1 = g_2 = 0$) :

$$R_1 = L_1 + (n_1/n_2) L_2, \quad R_2 = L_2 + (n_2/n_1) L_1, \text{ ce qui donne } R_2/R_1 = n_2/n_1,$$

- cas de la cavité concentrique ou sphérique ($g_1 g_2 = 1$) :

$$n_1 R_2 + n_2 R_1 = n_1 L_2 + n_2 L_1.$$

Dans le cas de la cavité hémisphérique, la stabilité sera obtenue pour $R_1 \geq L + (n_1/n_2 - 1) L_2$, avec $L = L_1 + L_2$.

Dans le cas de la cavité confocale, la stabilité est obtenue pour :

$$R_1 \geq L + (n_1/n_2 - 1) L_2$$

$$R_2 \geq L + (n_2/n_1 - 1) L_1$$

Enfin, pour la cavité concentrique ou sphérique, la condition relative à la stabilité est :

$$R_1 \geq \frac{L}{2} + \left( \frac{n_1}{n_2} - 1 \right) \frac{L_2}{2}$$

$$R_2 \geq \frac{L}{2} + \left( \frac{n_2}{n_1} - 1 \right) \frac{L_2}{2}$$

Dans chaque cas, il est possible de faire varier soit l'indice $n_2$, soit l'indice $n_1$, soit l'une des longueurs $L_1$ ou $L_2$ de façon à satisfaire à l'inégalité correspondante pour amener la cavité dans un état stable. La variation de l'un de ces paramètres est obtenue par des moyens de commande externes. Comme, par ailleurs, l'état optiquement stable de la cavité correspond à un état à faible pertes et l'état optiquement instable à un état à fortes pertes, on a ainsi un nouveau moyen de déclencher activement une cavité.

Ainsi, on peut monter par exemple le miroir de sortie sur un dispositif piézoélectrique permettant de moduler sa position, et donc la longueur $L_2$ du milieu d'indice $n_2$. Ceci est illustré sur la figure 8 où la référence 55 désigne un matériau actif laser d'indice $n_1$, la référence 56 un milieu d'indice $n_2$ fixe (mais différent de $n_1$) et où la position du miroir de sortie 57 d'une cavité hémisphérique est modifiée d'une position A où la cavité est optiquement stable à une position B où la cavité est optiquement instable.

De façon alternative, on peut utiliser comme milieu d'indice $n_2$ un milieu électro-optique dont l'indice est modulé par l'application d'un champ électrique : c'est ce qui a été décrit en liaison avec les figures 4 et 5.

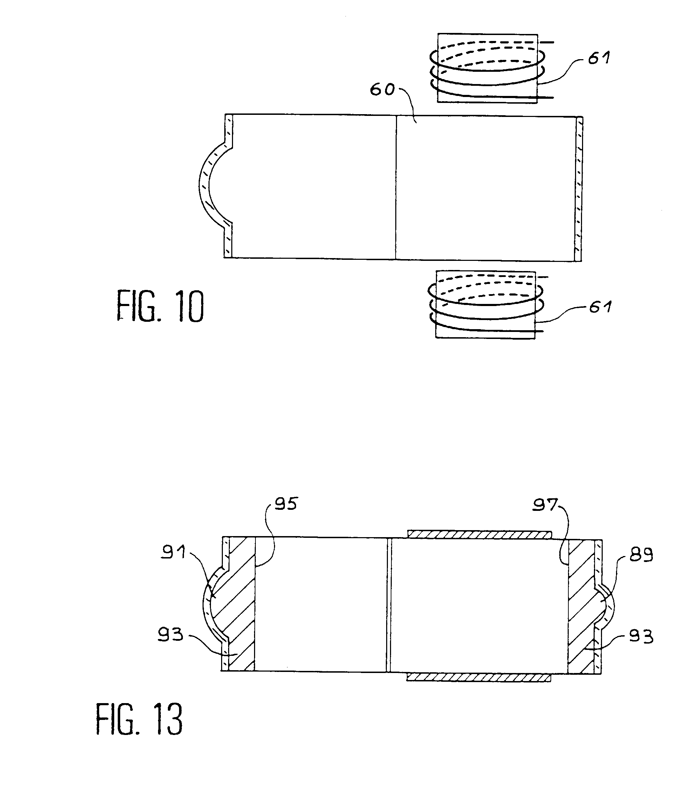

Ainsi qu'illustré sur la figure 9, on peut également utiliser, comme milieu d'indice $n_2$, un matériau 57 non linéaire pompé par un second faisceau laser 58 dirigé sur ce matériau. La valeur de l'indice $n_2$ est modulée par le pompage. De tels matériaux non linéaires sont décrit dans l'ouvrage intitulé "Handbook of laser science and technology", vol. 3, part 1, section 1, CRC Press, 1986. La modification de l'indice du milieu d'indice $n_2$ conduit à une modification de la longueur optique de l'unique cavité comprise entre les miroirs d'entrée 47 et de sortie 49, et donc au passage d'une position instable à une position optiquement stable ou l'inverse. Ceci conduit au déclenchement de la cavité.

Il est également possible d'utiliser, comme milieu d'indice $n_2$, un matériau magnéto-optique 60 (voir figure 10) dont l'indice $n_2$ est modifié en réponse à un champ magnétique externe. Par exemple, on peut utiliser, pour changer l'indice $n_2$, un électroaimant 61 situé à proximité du matériau d'indice $n_2$. Des matériaux ayant cette propriété sont décrits dans l'ouvrage "Handbook of laser science and technology", vol.4, part 2, section 2, CRC Press, 1986.

Par ailleurs, la température peut être utilisée pour moduler la longueur optique de la cavité laser. En effet, de nombreux matériaux voient leur longueur varier avec une variation de température.

Selon un autre mode de réalisation, la pression peut également permettre de modifier la longueur optique dans la cavité, certains matériaux ayant un indice $n_2$ dépendant de la pression.

Selon une autre variante, on peut également modifier les paramètres $(n_1, L_1)$ du milieu actif laser par des moyens électriques, thermiques ou mécaniques. Par exemple, on peut modifier la longueur $L_1$ en modifiant la position du miroir d'entrée, monté sur des moyens piézoélectriques. Dans le cas où on agit uniquement sur l'indice $n_1$ du matériau laser (certains matériaux utilisés comme matrice pour le milieu actif laser, comme le YAG, présentent des propriétés électrooptiques), il est essentiel de garder dans la cavité un second milieu d'indice $n_2$ différent de $n_1$, de façon à ce que toute modification de l'indice ait un effet sur la modification de la longueur optique.

Dans le cas où on ne modifierait que la longueur totale de la cavité optique (et non pas les indices), il est possible de ne disposer qu'un milieu laser d'indice $n_1$ à l'intérieur de la cavité, sans un second milieu d'indice $n_2$. Dans un tel cas, le système de déclenchement de la cavité en mode actif est extrêmement simplifié par rapport aux systèmes connus. En effet, on n'a alors plus besoin de disposer d'un deuxième matériau, tel que par exemple un matériau électro-optique.

Le fait d'utiliser une cavité hémisphérique, confocale, concentrique ou sphérique permet de concentrer le faisceau laser à l'intérieur du matériau électro-optique, comme on peut le voir sur la figure 7. La section du faisceau laser étant diminuée, il est possible de diminuer l'épaisseur du matériau d'indice $n_2$. Dans le cas où on utilise un matériau électro-optique définissant avec le matériau laser une cavité unique, on peut donc diminuer la distance nécessaire entre les électrodes de contact (référencées 28, 30 sur la figure 4 et 38, 40 sur la figure 5) pour obtenir le champ E nécessaire à la modulation de l'indice $n_2$. La tension à appliquer aux électrodes pour obtenir le même champ E s'en trouve diminuée d'autant. Par ailleurs, dans le cas où le déclenchement du laser est obtenu en modulant $n_2$ à l'aide d'une tension de commande externe, les relations entre w, g et n étant linéaires, et les cavités étant définies dans la zone de sensibilité maximum, une faible variation relative de $n_2$ de l'ordre de $10^{-4}$, suffit pour accorder la cavité autour de la limite de stabilité.

Au cas où il serait difficile d'ajuster les épaisseurs $L_1$ et $L_2$ avec une précision de $10^{-4}$ (soit un contrôle d'épaisseur de 0,1 $\mu$m dans le cas des microlasers), il faut ajuster ces longueurs avant le déclenchement, soit par application d'un champ électrique continu, soit en régulant la température de la cavité, soit par tout autre moyen mécanique (effet piézoélectrique par exemple) . Cet ajustement de la longueur permettra de définir l'état "off" du laser, en ajustant par exemple la cavité sur un état instable. A partir de cet état initial, il suffit dans le cas où le second matériau est du type électrooptique, d'appliquer une impulsion rapide de champ électrique pour moduler rapidement $n_2$, de façon à stabiliser la cavité et pour obtenir une impulsion laser.

Tout ce qui a été décrit ci-dessus peut s'appliquer aussi bien au cas d'une cavité microlaser qu'au cas général d'une cavité laser montée en limite de stabilité et dont on ajuste la longueur optique de façon à la faire passer d'un état instable à un état stable.

Par ailleurs, il est possible d'inverser les positions du milieu actif laser et du second milieu d'indice n, ce dernier se trouvant alors du côté du miroir d'entrée : on a toujours une seule cavité, chacun des deux milieux assurant toujours la même fonction.

En ce qui concerne les lasers de taille "macroscopique" (par opposition aux microlasers), les étapes de réalisation d'une cavité telle que par exemple décrite sur l'une des figures 4, 5, 7 à 10 sont connues de l'homme de l'art. L'assemblage des deux milieux d'indice n1 et n2 est réalisé par collage ou adhérence moléculaire. Le dépôt d'une couche antireflet à l'interface des deux matériaux est également connue, ainsi que le dépôt de couches réfléchissantes pour former les miroir d'entrée et de sortie ayant des propriétés géométriques (rayons de courbures) voulues permettant de définir une cavité en limite de stabilité. Par exemple, la face d'entrée du matériau traversé en premier par le faisceau de pompage (milieu actif laser sur les figures 4, 5) peut être polie avec le rayon de courbure voulu. Le dépôt direct des miroirs sur les matériaux contenus dans la cavité permet de rendre cette dernière compacte et donc de résoudre le problème du déréglage en cours d'utilisation.

Un procédé de fabrication d'un microlaser selon la présente invention, comportant un milieu actif laser et un matériau électrooptique, va maintenant être décrit. Ce procédé comporte des étapes numérotées 1°) à 15°) :

1°) - Dans une première étape, on procède au calcul des rayons de courbure et des longueurs des différents milieux d'indices $n_1$ et $n_2$, de façon à être à la limite de la stabilité de la cavité.

2°) - Dans une deuxième étape, on procède au découpage et au polissage double face d'une lame de matériau laser et éventuellement d'une lame du matériau d'indice $n_2$, tel qu'un matériau électro-optique (par exemple $LiTaO_3$),

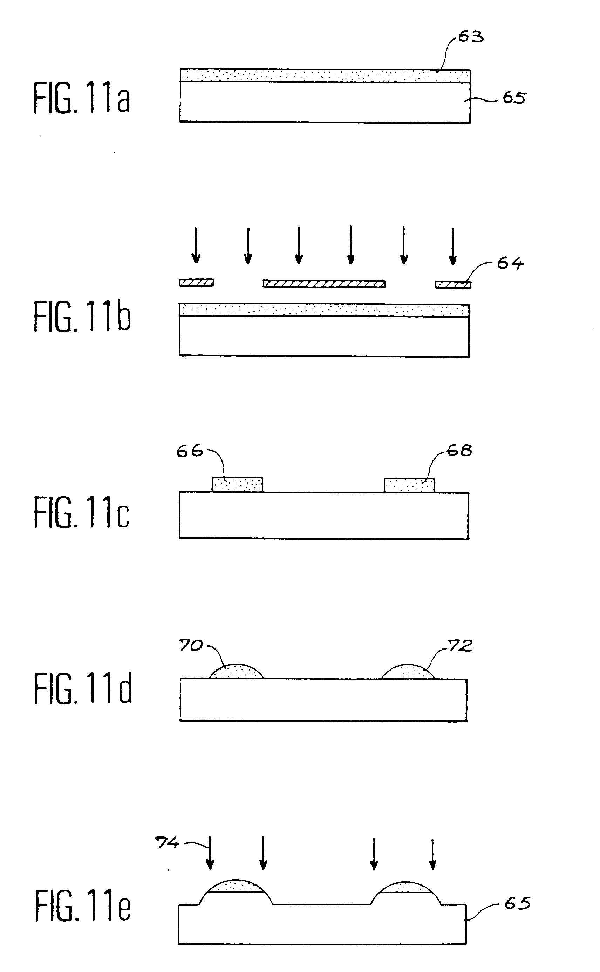

3°) - On fabrique ensuite par photolithographie et usinage, une microlentille sur la face d'entrée du matériau laser (diamètre typique 100 à 500μm, et rayon de courbure $R_1$ de 1 à 2 mm). Cette étape est illustrée sur les figures 11a à 11e. Dans une première sous-étape (figure 11a), il est procédé au dépôt d'une couche 63 de résine photosensible sur la face d'entrée du matériau laser 65. Puis il est procédé à l'insolation de la résine à travers un masque 64 à l'aide d'un rayonnement UV (figure 11b). L'étape suivante (figure 11c) est une étape de révélation chimique de la résine, ne laissant subsister que des plots 66, 68 destinés à former les microlentilles. Il est ensuite procédé au fluage thermique de la résine (figure 11d) pour former les microlentilles en 70, 72 en résine, et à l'usinage du matériau laser 65 à l'aide d'un faisceau d'ions 74 (figure 11e) .

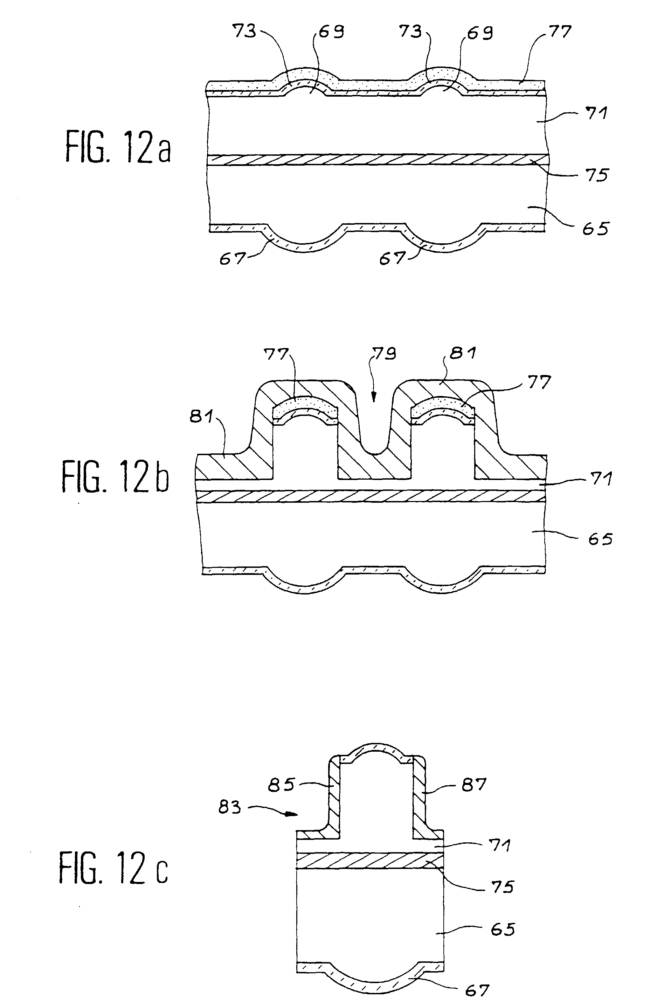

Les étapes 4°) à 9°) sont ensuite décrites en liaison avec la figure 12a.

4°) - Il est procédé au dépôt du miroir d'entrée 67 sur la face d'entrée du matériau laser 65 (par exemple, pour le miroir d'entrée dichroïque, avec une réflectivité supérieure à 99,5% à la longueur d'onde du faisceau laser, et une transmission supérieure à 80% à la longueur d'onde du faisceau de pompage).

5°) - Puis il est procédé à la fabrication, par photolithographie et usinage, de microlentilles 69 sur la surface de sortie du matériau électro-optique 71 (diamètre typique 100 à 500 μm et rayon de courbure $R_2$ de 1 à 2 mm). Dans le cas où le miroir de sortie est un miroir plan, il n'est pas procédé à la formation des microlentilles sur la face de sortie du matériau électro-optique. Par ailleurs, le diamètre du miroir (microlentille) de sortie peut être inférieur au diamètre du miroir (microlentille) d'entrée.

6°) - On procède ensuite au dépôt du miroir de sortie 73 sur la face de sortie du matériau électro-optique 71 (miroir de sortie avec une réflectivité typique de 85 à 99% à la longueur d'onde du faisceau laser et éventuellement avec une réflectivité supérieure à la longueur d'onde du faisceau de pompage pour réfléchir le faisceau de pompe qui n'est pas totalement absorbé au premier passage).

7°) - Dans la septième étape, une couche antireflet 75 est déposée à l'interface matériau laser 65-matériau électro-optique 71. Cette couche pourra être déposée soit sur la face de sortie plane du matériau laser 65, soit sur la face d'entrée plane du matériau électro-optique 71. Par ailleurs, ce dépôt n'est pas absolument indispensable pour le fonctionnement du système.

8°) - Les deux lames sont ensuite collées à l'aide d'une colle optique ou assemblage par tout autre procédé, par exemple par adhérence moléculaire.

9°) - Il est possible de protéger la face de sortie par un dépôt de résine 77.

10°) - Il est possible de réaliser des rainures 79 (figure 12b) dans le matériau électro-optique à l'aide d'une scie à lame diamantée utilisée en microélectronique, pour pouvoir réaliser par la suite les électrodes avec l'espacement voulu (de l'ordre de 100 μm, par rapport à une distance interélectrode de 1mm dans l'art antérieur).

11°) - Il est ensuite procédé au dépôt de contacts électriques par évaporation (par exemple, dépôt d'une couche Cr-Au 81 qui enrobe la résine 77 et le matériau électrooptique 71).

12°) - Il y a ensuite décapage chimique de la résine de protection (figure 12c).

13°) - Des puces élémentaires 83, de taille sensiblement égale à 1mm$^2$ sont ensuite découpées comme illustré sur la figure 12c où les références 85, 87 désignent les électrodes de commande du matériau électrooptique 71.

14°) - Les puces sont montées sur un support de circuit imprimé métallisé et adapté en impédance, avec prise de contact électrique et montage dans un boîtier blindé.

15°) - Il peut ensuite être procédé au montage en boîtier et à la connexion avec une diode laser de pompe et un connecteur électrique pour le déclenchement.

Selon une variante, il est possible de fabriquer les microlentilles avec un masque à densité variable. Par ailleurs, comme illustré sur la figure 13, des microlentilles 89, 91 peuvent être réalisées sur un matériau 93 comme le verre ou la silice, transparent à la longueur d'onde du laser. Ces substrats avec les microlentilles peuvent ensuite être accolés sur les faces d'entrée 95 et de sortie 97 du microlaser. La structure obtenue est illustrée sur la figure 13.

Par ailleurs, tous types de matériaux laser solides (cristaux ou verres) connus peuvent être utilisés. En particulier la longueur d'onde sera déterminée en fonction des ions actifs : autour de 1μm pour Nd et Yb, autour de 1,55μm pour Er et Er+Yb et autour de 2μm pour Tm et Ho. Les caractéristiques spectrales des miroirs seront choisies d'une part en fonction des longueurs d'onde, d'autre part en fonction des caractéristiques de déclenchement du microlaser. Dans le cas où le second matériau, d'indice $n_2$, est un matériau électrooptique, tous les matériaux électro-optiques ou semi-conducteurs connus, permettant d'obtenir la variation de la longueur optique par une tension de commande peuvent être utilisés pour réaliser la deuxième cavité. Ces matériaux seront choisis en fonction de la longueur d'onde et en fonction de leurs propriétés électro-optiques. Par ailleurs, comme on l'a déjà vu ci-dessus, on peut également choisir des matériaux dont l'indice varie en fonction d'un champ magnétique ou en réponse à un faisceau laser incident, ou en réponse à une variation de température ou de pression.

Des avantages apportés par une cavité microlaser selon la présente invention ont déjà été mentionnés ci-dessus : un nouveau type de déclenchement actif est proposé, permettant la mise au point de systèmes lasers plus simples.

De plus, l'invention permet de diminuer la taille du milieu d'indice variable $n_2$, ce qui permet de réduire ou non la taille du microlaser. Dans le cas d'un matériau électrooptique, la distance inter-électrodes peut être ramenée à 100μm, par rapport à environ 1 mm selon l'art antérieur. Une tension de commutation beaucoup moins importante est donc nécessaire. De plus, le microlaser est monolithique et peut être fabriqué par des techniques collectives du type de celles mises en oeuvre en microélectronique et qui permettent de réaliser des dispositifs microlasers à bas coût.

## Revendications

1. Cavité microlaser à déclenchement actif comportant un matériau actif laser (24, 34, 53, 55) et deux miroirs (20, 22 ; 42, 44 ; 51, 52) formant une seule cavité Fabry-Perot, hémisphérique, ou formant une cavité Fabry-Perot, hémisphérique, ou confocale, ou concentrique ou sphérique, en limite de stabilité optique, un second matériau (26, 36, 54, 56, 57, 60) de longueur optique variable, et des moyens pour faire varier la longueur optique de la cavité de façon à la faire passer d'un état optiquement instable à un état optiquement stable.

2. Cavité microlaser selon la revendication 1, les deux matériaux étant juxtaposés, ou collés l'un avec l'autre ou en contact l'un avec l'autre par adhérence moléculaire.

3. Cavité microlaser selon la revendication 2, une couche antireflet étant déposée à l'interface des deux matériaux.

4. Cavité microlaser selon l'une des revendications 1 à 3, les moyens pour faire varier la longueur optique de la cavité comportant des moyens pour faire varier la longueur optique du second matériau.

5. Cavité microlaser selon l'une des revendications 1 à 4, les deux matériaux étant d'indices optiques différents et les moyens pour faire varier la longueur optique de la cavité comportant des moyens pour faire varier l'indice optique du second matériau.

6. Cavité microlaser selon la revendication 1, le second matériau étant un matériau électro-optique (26, 36).

7. Cavité microlaser selon la revendication 1, dans laquelle on fait varier l'indice du second matériau par une variation de température.

8. Cavité microlaser selon la revendication 1, dans laquelle on fait varier l'indice du second matériau par une variation de pression.

9. Cavité microlaser selon la revendication 1, le second matériau étant un matériau magnéto-optique (60).

10. Cavité microlaser selon la revendication 1, le second matériau étant un matériau optiquement non linéaire (57).

**11.** Cavité microlaser à déclenchement actif comportant un matériau actif laser (24, 34, 53, 55) et deux miroirs (20, 22 ; 42, 44 ; 51, 52) formant une seule cavité Fabry-Perot, hémisphérique, ou confocale, ou concentrique ou sphérique, en limite de stabilité optique, la longueur de la cavité pouvant être ajustée à l'aide de moyens piézoélectriques permettant de faire varier la position de l'un au moins des deux miroirs de la cavité, afin de faire passer cette dernière d'un état optiquement instable à un état optiquement stable.

**12.** Microlaser comportant une cavité selon l'une des revendications précédentes, et des moyens optiques de pompage de la cavité.

## Patentansprüche

**1.** Mikrolaserresonator mit aktiver Güteschaltung, ein aktives Lasermaterial (24, 34, 53, 55) und zwei Spiegel (20, 22; 42, 44; 51, 52) umfassend, die einen einzigen Fabry-Perot-Resonator bilden, halbkugelförmig oder konfokal oder konzentrisch oder kugelförmig, innerhalb bzw. an der Grenze der optischen Stabilität, sowie ein zweites Material (26, 36, 54, 56, 57, 60) mit variabler optischer Länge, und Einrichtungen, um die optische Länge des Resonators zu verändern, so daß er von einem optisch instabilen Zustand in einen optisch stabilen Zustand übergeht.

**2.** Mikrolaserresonator nach Anspruch 1, wobei die beiden Materialien nebeneinanderliegen oder miteinander verklebt sind oder durch molekulare Adhäsion miteinander in Kontakt sind.

**3.** Mikrolaserresonator nach Anspruch 2, wobei an der Grenzfläche der beiden Materialien eine Antireflexschicht abgeschieden wird.

**4.** Mikrolaserresonator nach einem der Ansprüche 1 bis 3, wobei die Einrichtungen zur Veränderung der optischen Länge des Resonators Einrichtungen zur Veränderung der optischen Länge des zweiten Materials umfassen.

**5.** Mikrolaserresonator nach einem der Ansprüche 1 bis 4, wobei die beiden Materialien verschiedene optische Brechzahlen haben und die Einrichtungen zur Veränderung der optischen Länge des Resonators Einrichtungen zur Veränderung der optischen Länge des zweiten Materials umfassen.

**6.** Mikrolaserresonator nach Anspruch 1, wobei das zweite Material ein elektrooptisches Material (26, 36) ist.

**7.** Mikrolaserresonator nach Anspruch 1, bei dem man die Brechzahl des zweiten Materials mittels einer Temperaturveränderung variiert.

**8.** Mikrolaserresonator nach Anspruch 1, bei dem man die Brechzahl des zweiten Materials mittels einer Druckveränderung variiert.

**9.** Mikrolaserresonator nach Anspruch 1, wobei das zweite Material ein magnetooptisches Material ist.

**10.** Mikrolaserresonator nach Anspruch 1, wobei das zweite Material ein optisch nichtlineares Material (57) ist.

**11.** Mikrolaserresonator mit aktiver Güteschaltung, ein aktives Lasermaterial (24, 34, 53, 55) und zwei Spiegel (20, 22; 42, 44; 51, 52) umfassend, die einen einzigen Fabry-Perot-Resonator bilden, halbkugelförmig oder konfokal oder konzentrisch oder kugelförmig, innerhalb bzw. an der Grenze der optischen Stabilität, wobei die Länge des Resonators eingestellt werden kann mit Hilfe piezoelektrischer Einrichtungen, die ermöglichen, die Stellung von wenigstens einem der beiden Spiegel des Resonators zu verändern, so daß dieser letztere von einem optisch instabilen Zustand in einen optisch stabilen Zustand übergeht.

**12.** Mikrolaser, einen Resonator nach einem der vorangehenden Ansprüche und optischen Pumpeinrichtungen des Resonators umfassend.

## Claims

**1.** Active-switching microlaser cavity incorporating an active laser material (24, 34, 53, 55) and two mirrors (20, 22;

42, 44; 51, 52) forming a single hemispherical, or confocal, or concentric, or spherical Fabry Perot cavity at the optical stability limit, a second material (26, 36, 54, 56, 57, 60) of variable optical length and means for varying the optical length of the cavity so as to permit a passage from an optically unstable state to an optically stable state.

2. Microlaser cavity according to claim 1, the two materials being juxtaposed, or bonded to one another, or in contact with one another by molecular adhesion.

3. Microlaser cavity according to claim 2, an antireflection layer being deposited at the interface of the two materials.

4. Microlaser cavity according to one of the claims 1 to 3, the means for varying the optical length of the cavity incorporating means for varying the optical length of the second material.

5. Microlaser cavity according to one of the claims 1 to 4, the two materials having different optical indices and the means for varying the optical length of the cavity having means for varying the optical index of the second material.

6. Microlaser cavity according to claim 1, the second material being an electrooptical material (26, 36).

7. Microlaser cavity according to claim 1, wherein the index of the second material is varied by a temperature variation.

8. Microlaser cavity according to claim 1, wherein the index of the second material is varied by a pressure variation.

9. Microlaser cavity according to claim 1, the second material being a magnetooptical material (60).

10. Microlaser cavity according to claim 1, the second material being an optically non-linear material (57).

11. Active-switching microlaser cavity incorporating an active laser material (24, 34, 53, 55) and two mirrors (20, 22; 42, 44; 51, 52) forming a single hemispherical, or confocal, or concentric, or spherical Fabry Perot cavity at the optical stability limit, the length of the cavity being adjustable with the aid of piezoelectric means making it possible to vary the position of at least one of the two mirrors of the cavity, in order to pass the latter from an optically unstable state to an optically stable state.

12. Microlaser having a cavity according to any one of the preceding claims, and optical cavity pumping means.

FIG. 1

FIG. 2a

FIG. 2b

FIG. 3

FIG. 4

FIG. 5

FIG. 6a

FIG. 6b

FIG. 7

FIG. 8

FIG. 9

14

FIG. 10

FIG. 13

FIG.11a

FIG.11b

FIG.11c

FIG.11d

FIG.11e

FIG. 12 a

FIG. 12 b

FIG. 12 c